# EUROPEAN PATENT APPLICATION

(11) **EP 1 362 688 A2**
(43) Date of publication of application: **19.11.2003**
(21) Application number: 03010012.7
(22) Date of filing: 02.05.2003
(51) Int. Cl.: B29C 67/24, B28B 11/24

(54) **Kiln for the polymerization of slabs of granulated quartz, marble, sand and/or other material, bound with a thermo-setting resin**

(30) Priority: 13.05.2002 IT VR20020053
(71) Applicant: Brutti, Franco, 37128 Verona (IT)
(72) Inventor: Brutti, Franco, 37128 Verona (IT)
(74) Representative: Savi, Alberto

(57) **Abstract**

The proposed kiln is used to manufacture slabs from granulated quartz or marble or other stone products in general of various size and/or sand, bound with a thermo-setting resin. In practice, the material is heated till reaching the start temperature (80°C - 85°C) for the polymerization reaction.

In general, a kiln (1) according to the invention is provided with a distinct belt conveyor (2) which is on the same line of a further preceding belt (3). The belt (3) is arranged under a press (4) and is connected with the belt conveyor (2) directly. In addition, the kiln (1) is provided with a heating system which includes upper heating plates (5) and lower heating plates (6). The upper heating plates (5) heat apart from the heating lower plates (6) and vice versa till reaching a temperature of 80°C-85°C starting the polymerization exothermic reaction of the resin.

The upper heating plate (5) is provided with hydraulic jacks (7) or compressed-air pistons through which the plate itself is lowered against a slab (L) under a high pressure. In this way, a closer contact with the slab material to be polymerized is obtained.

## Description

The present invention regards a kiln for the polymerization of slabs of granulated quartz or marble or sand and/or other material, bound with a thermo-setting resing.

In practice, the resin becomes rigid by heating it at a temperature of about 80°C to 120°C max.

This invention relates to the production of slabs from granulated quartz or marble or other stone materials of various size and/or sand, bound with a thermo-setting resin.

In practice, the material is heated till reaching the start temperature (80°C-85°C) for the polymerization reaction.

The said reaction is exothermic and the correct temperature must be maintained in the innest parts of the slab till the completion of the reaction.

At present, the slabs are vibro-compacted. Then, the slabs are inserted in tower kilns which usually have 18 vertically movable shelves with covers. In these kilns it is possible to reach a temperature of about 80°C-85°C. However, it is necessary to reach a temperature of 120° in plants which utilize rubber moulds or rubber formworks because the rubber is insulating and therefore, a higher temperature is needed in these cases.

The stay time in the kiln varies from at least 20 minutes to about 40 minutes at most according to the thickness of the slab. The transmission of the heat, which is generated by a suitable heating plant, takes place through hydraulic circuits which are arranged in the inside of shelves and contain diathermic oil. The hydraulic circuits are generally differentiated in an upper hydraulic circuit and a lower hydraulic circuit so that it is possible to thermally correct the flatness of the final product or slab.

However, the so-described system has the following drawbacks:
1) High cost of a complex plant. The complexity of the plant is caused by the necessary presence of a heating plant and a tower kiln with vertically movable shelves in which the hydraulic feeding of the shelves is differentiated. The shelves include coils internally in which heated diathermic oil flows.
2) Necessity of interrupting the protective on, under, before and after each slab.
3) Length of the time needed to complete the polymerization of the slabs: approximately 20 min. (for slab thickness of 13 mm.) to 40 min. (for slab thickness of 33-38 mm.).
4) High cost of production due to the obvious considerable heat dispersions in various sectors.
5) Danger due to the presence of the diathermic oil. The diathermic oil can go out of several parts (connections, hoses, valves, etc.) and burn. In addition, the diathermic oil can make the adjacent parts slippery.
6) Complexity of the temperature control. The kiln takes a very long time to reach the temperature of running (and all this energy is wasted as well as the cooling after stopping the plant at the end of the day); in addition, the flux of the diathermic oil does affect a correct heat transmission between the kiln plane and the slab as well as between the cover and the slab. The same applies to the thickness of the slab to be processed because the slab thickness may vary more times during the day.

More slabs showing different thicknesses may be inserted in the kiln. However, slabs showing different thicknesses require a different heating for the flatness and therefore, a compromise situation occurs and the flatnesses are never perfect.

In practice, the prior art machine for the production of slabs consists of a belt conveyor which can be ideally subdivided in modules of the same length (each of about 4 ml.). This length corresponds to the length (3.08 ml.) of the slabs to be produced, a free space being provided between two subsequent slabs.

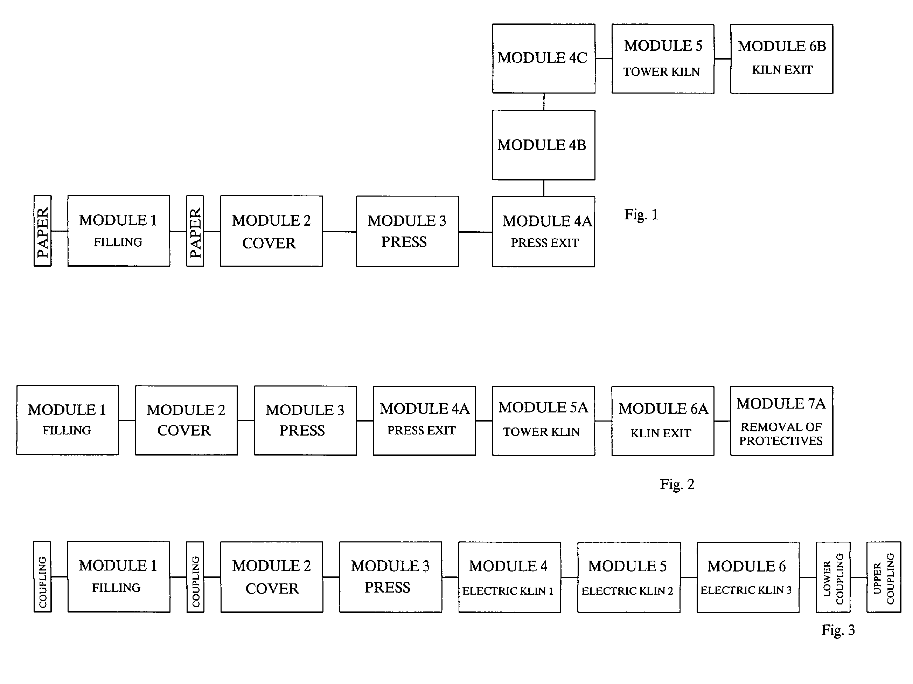

The said modules are represented by:
1) A fixed filling module for the gum mould or a movable filling module for the steel mould under which the paper or protective has been arranged.
2) A covering module on which the cover for the gum mould or the paper or protective is placed (on the material to be pressed).
3) A vibro-compacting module (press) in which the material is subjected to the compaction and extraction of air and vapour to avoid the presence of porosity in the slabs.
4) A module for getting out of the vibro-compaction in which according to some types of plant as it appears from the diagram in Fig. 1 (modules 4A, 4B and 4C) at first, the slab is pushed laterally and then, the slab is pushed longitudinally in the tower kiln (5B). However, the pushers cause the formation of undulations which affect the quality of the finished product. In case the plants utilize rubber moulds or rubber formworks (diagram of Fig. 2), the lateral displacement is no more necessary because from this standing module the rubber mould containing the vibro-compacted slab goes in the shelves kiln directly in line from which it goes out after 20-40 minutes, always in line.
5) A heating module (tower kiln 5A and 5B - diagrams of Figures 1 and 2).
6) A module for leaving the kiln (6B and 6A - diagrams of Figures 1 and 2).
7) A module for removing the protectives 7A - diagram of Fig. 2 (cover and actual mould in case of plants utilizing rubber moulds while in plants utilizing paper, the paper will be removed later through passing in an expensive complex sand-blasting machine).

The belt conveyor has a discontinuous movement and covers about 4.0 ml. each time in order to present the slab in the various fixed points (always in the same fixed position). The cycle lasts at least about two-three min. In other words, the slabs stand still for two-three min. and then, they go on to the subsequent module and stop here for other two-three min. and therefore, if a slab is inserted in a eighteen-shelf kiln every two min., the first perfectly polymerized slab leaves the kiln after 36 min. and is ready to be cooled and worked.

The aim of the present invention is to carry out and conceive a kiln showing the following features:
- Low cost: the plant cost is reduced because the heating station, the diathermic oil circuit and the complex tower kiln are no more necessary. In addition, the energy cost for each slab to be produced is reduced.
- Speed: the polymerization speed is optimized (reduced) so that it is possible to increase the hourly production and to reduce as much as possible the time needed to obtain the finished slab.

In addition, the peculiarity of this type of kiln is that the slab covers a rectilinear distance on the same plane and it is not necessary to interrupt the protective on and under the slab itself and therefore, the detachment of the protective from the slab can take place in a very simple manner. At the end of the line, the protective is rewinded by means of suitable winding devices arranged on and under the slab.

Further features and details of the invention will be better understood from the following description which is given as a non-limiting example on the base of the accompanying drawings wherein:
Fig. 1 is a diagram of a conventional plant according to a first version;
Fig. 2 is a diagram of a conventional plant according to a second version;
Fig. 3 is a diagram of a plant according to the invention;
Fig. 4 is a schematic lateral view of a kiln carried out according to the present invention;
Fig. 5 is a schematic front view of the kiln according to the invention.

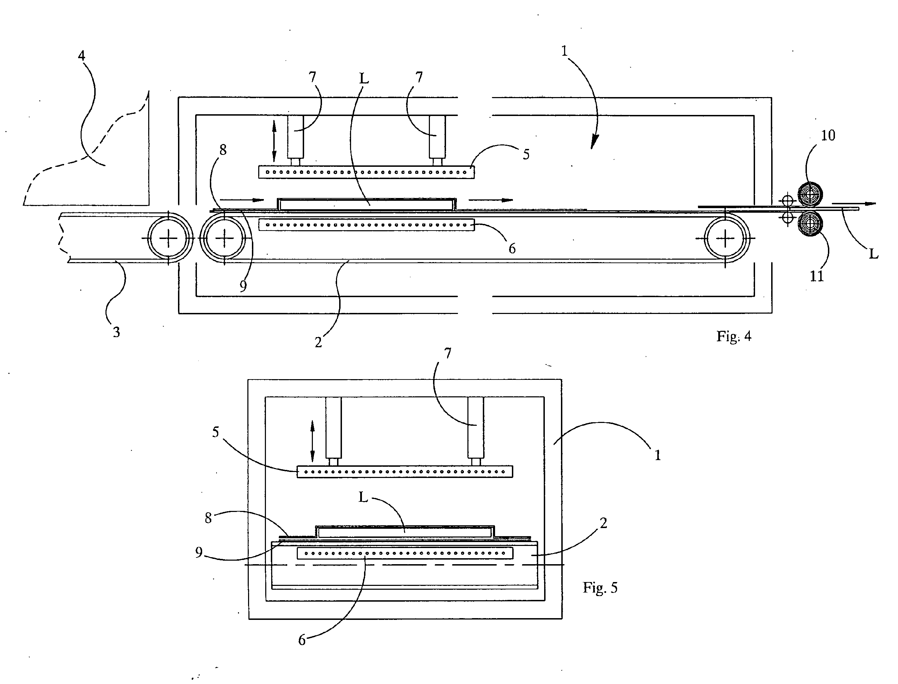

With reference to the accompanying Figures 3 and 4, a kiln according to the present invention comprises an insulated chamber 1 in which a belt conveyor 2 is arranged.

The main feature of the present kiln is represented by an extension of a belt conveyor 3, which is the base of this kind of plant. More precisely, there is provided a distinct belt conveyor 2 which is on the same line of the belt conveyor 3 which is arranged before the belt conveyor 2. In addition, the belt conveyor 3 is arranged under a press 4 and is connected with the belt conveyor 2 directly.

The real belt conveyor 2 is arranged in the kiln 1 and may be carried out with other material than rubber as the preceding belt and according to the specific use requirements. In particular, the belt conveyor 2 is metallic to permit a better heat transmission between the lower fixed plane and the slab to be heated which is placed on the plane itself.

In practice, the belt 2 conveys the slab L. A polypropylene or silicone polyesther or silicone nylon film, which may be coupled with paper, or other similar material as described in Italian Utility Model Application Serial No. VR99U000073 filed in the name of the present applicant on 17 December 1999 is applied on and under the slab to be conveyed.

In general, it is preferable to couple the film with paper because the paper makes the film more resistant. Indeed, the thickness of the film is usually very thin (12-24 micron) to save on the cost.

A further feature of the kiln is that the lower and upper parts of the kiln must be heated properly through upper plates 5 and lower plates 6 which heat separately till reaching a temperature of 80°C-85°C starting the polymerization exothermic reaction of the resin.

The upper part of the kiln is equipped with hydraulic jacks 7 or air-compressed pistons which lower the part itself against the slab L under a high pressure in order to obtain a closer contact with the material of the slab to be polymerized.

The length of the kiln may include one or more modules in order to graduate the heating according to specific requirements.

It is possible to utilize whatever type of heating but it must satisfy both the requirement of low cost and the plant cost is reduced because the heating station, the diathermic oil circuit and the complex tower kiln are no more necessary and the energy cost for each slab to be produced is reduced and the requirement of speed considering that also the polymerization speed is optimized (reduced) so that it is possible to increase the hourly production and to reduce as much as possible the time needed to obtain the finished slab.

In addition, the peculiarity of this type of kiln is that the slab covers a rectilinear distance on the same plane and it is not necessary to interrupt the protective on and under the slab itself and therefore, the detachment of the protective from the slab can take place in a very simple manner. At the end of the line, the protective is rewinded by means of suitable winding devices arranged on and under the slab.

This type of kiln is insulated thermally and therefore, all the energy is utilized to heat only the material to be polymerized and therefore, useless expensive losses of heat are avoided.

In addition, the extraction of vapours (especially styrol) to be sent to a post-combustion boiler is very simple and important because the adjacent areas are not polluted by these vapours.

The simplest type of heating for a kiln according to the present invention is an electric heating utilizing resistances arranged in the inside of the two heating plates 5 and 6. Otherwise, it is possible to feed two copper plates showing also a wide thickness with an electric energy of low voltage and high power. In any case, a homogeneous heating must be secured in all the sectors of the slab L. In addition, there is the possibility of differentiating the temperature between the upper plate and the lower plate in order to control and modify the flatness of the slab. The flatness of the slab depends on a uniform polymerization and it is possible to utilize whatever type of heating.

A protective film/paper coupling 9 is distributed from a roll (some thousands of meters long and 1.5-1.6 ml. wide). The protective film/paper coupling 9 is applied at the beginning of the belt conveyor, the paper being turned downward and the protective film being pressed against the material before the material is poured in the formwork mould or on the belt conveyor itself.

In the second covering module, another roll of protective film/paper coupling is positioned to permit the application of the coupling. However, in this case the lower paper layer 8 is turned upward while the detachable protective touches the material. In other words, when the slab L gets in the kiln, the piece to be heated appears to be as a paper wrapper.

The coupling is always in line and is never interrupted. Indeed, the protective film/paper detaches well from the slab once this slab has been polymerized in the kiln. After the detachment, the coupling rewinds onto rolls 10 and 11 and can be recovered and reutilized. The slab is now free from the protective, gets cold and is ready for a further processing.

There are several important advantages by utilizing this type of kiln. In practice, there is no loss of heat and the energy needed to heat is used only in the point of contact between the heating planes, which involves a considerable saving in the cost of production.

In addition, this type of kiln may be easily covered with heat insulators and insulated completely from the surrounding environment.

The start temperature of the polymerization reaction is reached rapidly by feeding the required quantity of energy and therefore, it is possible to have the first finished slab L in a very short time, i.e. 2-3 minutes or less, in place of 20-40 minutes, which is very important in particular situations such as the start of a new product or production when it is necessary to see the result as soon as possible.

In case of an eighteen-shelf tower kiln the result can be seen only when the first slab L comes out of the kiln but in the meantime other seventeen slabs are being produced which could not be well. In this case, the slabs are to be rejected or down-graded.

Moreover, the plant is very simple because it consists only of two simple unwinders. Each unwinder comprises a shaft equipped with a soft brake for the application of the film/paper coupling. The shaft with the brake is often provided in plants for the production of this kind of slabs, for instance in plants in which paper is utilized as protective.

At the end of this plant, both the upper winder 10 and the lower winder 11 are motorized.

When the belt conveyor that supports the slabs moves forward, the two couplings detach from the slabs easily and are winded onto the spools. In case, the rewinded couplings may be reutilized.

In Fig. 3 there are represented three kiln modules but they may be less than three. In practice, the modules are formed by an extension of the belt conveyor. This extension is the forming and vibro-compacting base plant.

The said part of the plant must be well-insulated thermally through insulated panels in order to avoid useless losses of heat. The upper part is movable vertically to permit a closer contact between the heating planes and the slab itself.

The cover is put on the vibro-compacted slab L also with a high pressure in order to create a safe contact between the electrodes and the slab and to calibrate the slab thickness in every point, if necessary.

Each of the modules represented in Fig. 3 is provided with a current generator for a correct supply of electric energy in order to obtain the most suitable temperature.

## Claims

1. Kiln for the polymerization of slabs of granulated quartz, marble, sand and/or other material, bound with a thermo-setting resin, **characterized in that** the kiln is provided with a distinct belt conveyor (2) which is on the same line of a further preceding belt (3) arranged under a press (4) and is connected with the belt conveyor (2) directly and that the upper and lower parts of the kiln are heated by means of upper heating plates (5) and lower heating plates (6), the upper heating plates (5) being heating apart from the heating lower plates (6) and vice versa till reaching the start temperature of the polymerization exothermic reaction of the resin.

2. Kiln for the polymerization of slabs of granulated quartz, marble, sand and/or other material, as claimed in the foregoing claim, **characterized in that** at least one of the said plates (5, 6) and preferably the upper plate (5) is placed on vertically moving devices.

3. Kiln for the polymerization of slabs of granulated quartz, marble, sand and/or other material, as claimed in the foregoing claim, **characterized in that** the said vertically moving devices of the upper plate (5) are represented by hydraulic jacks (7) or compressed-air pistons through which the plate itself is lowered against a slab (L) under a high pressure so as to obtain a closer contact with the slab material to be polymerized.

4. Kiln for the polymerization of slabs of granulated quartz, marble, sand and/or other material, as claimed in the foregoing claims, **characterized in that** the length of the kiln may include one or more modules in order to graduate the heating according to specific requirements.

5. Kiln for the polymerization of slabs of granulated quartz, marble, sand and/or other material, as claimed in the foregoing claims, **characterized in that** there are provided spool rewinders placed at the kiln exit for the recovering of the coupling which is always in line and is never interrupted, the protective film/paper being detached well from the slab once the slab has been polymerized in the kiln and after the detachment, the coupling is rewinded and can be recovered and reutilized.

6. Kiln for the polymerization of slabs of granulated quartz, marble, sand and/or other material, as claimed in the foregoing claims, **characterized in that** both the upper winder (10) and the lower winder (11) are motorized so that when the belt conveyor that supports the slabs moves forward, the two couplings detach from the slabs easily and are winded onto the spools and in case, the rewinded couplings may be reutilized.

7. Kiln for the polymerization of slabs of granulated quartz, marble, sand and/or other material, as claimed in the foregoing claims, **characterized in that** the cover is put on the vibro-compacted slab L also with a high pressure in order to create a safe contact between the electrodes and the slab and to calibrate the slab thickness in every point, if necessary.

8. Kiln for the polymerization of slabs of granulated quartz, marble, sand and/or other material, as claimed in the foregoing claims, **characterized in that** in practice, the kiln modules are formed by an extension of the belt conveyor, which extension is the forming and vibro-compacting base plant.

9. Kiln for the polymerization of slabs of granulated quartz, marble, sand and/or other material, as claimed in the foregoing claims, **characterized in that** each of the said modules is provided with a current generator for a correct supply of electric energy in order to obtain the most suitable temperature.
